# EUROPEAN PATENT APPLICATION

(11) **EP 1 729 498 A2**
(43) Date of publication of application: **06.12.2006**
(21) Application number: 06008821.8
(22) Date of filing: 27.04.2006
(51) Int. Cl.: H04N 1/32

(54) **Auxiliary message displaying device and method thereof**

(30) Priority: 31.05.2005 CN 200510075464
(71) Applicant: ASUSTeK Computer Inc., Peitou Taipei (TW)
(72) Inventor: Lin, Wei-Po, Peitou Taipei (TW); Dai, Hsiao-Hua, Peitou Taipei (TW)
(74) Representative: Schaeberle, Steffen

(57) **Abstract**

A computer system and an auxiliary message displaying device and method thereof are provided. The auxiliary message displaying module applied in a computer system comprises a processing unit, a display unit and a display driving unit. The computer system comprises a host, a main monitor and an operating system. The processing unit receives and processes a first data and then outputs a second data. The display unit is for displaying a message. The display driving unit controls the display unit to display message according to the second data. The driver of the operating system retrieves a message from the operating system and obtains the font corresponding to the message from the font database, and then the message is processed to generate the first data. When the host is at a standby mode, the auxiliary message displaying module operates and displays message using the standby power of the host.

## Description

### BACKGROUND OF THE INVENTION

### Field of the Invention

The invention relates in general to an auxiliary message displaying device and method thereof, and more particularly to an auxiliary message displaying device of a computer system and method thereof.

### Description of the Related Art

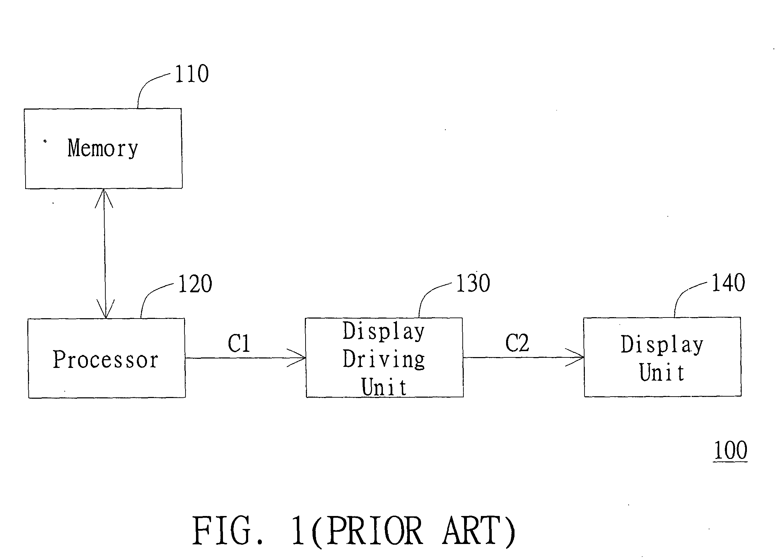

Ordinary consumer electronic products use vacuum fluorescent display (VFD) to display a message. Referring to FIG. 1, a diagram of a conventional VFD module is shown. VFD display module 100 comprises a memory 110, a processor 120, a display driving unit 130 and a display unit 140. The memory 110 is for storing a programming code of the processor 120 and a font data. The processor 120 controls the display driving unit 130, obtains and processes a corresponding font from the memory 110, and then uses a signal C1 to control the display driving unit 130. The display driving unit 130, according to the signal C1, uses a signal C2 to drive the display unit 140 to display the message.

The texts and fonts required for display purpose are stored in the memory 110. For an ordinary consumer electronic product such as a DVD player, the VFD module 100 is capable of displaying the message. If the function of displaying multiple languages is to be added to the electronic product, extra fonts of languages in use must be added to the memory 110. Consequently, the capacity of the memory 110 must be augmented, thus increasing manufacturing costs. Moreover, extra royalty fees need to be paid if extra fonts of other languages are used. Besides, the Windows operating system supports more than 60 languages, so the current VFD module can not be integrated with the Windows operating system to display the languages supported by the Windows operating system.

### SUMMARY OF THE INVENTION

It is therefore an object of the invention to provide an auxiliary message displaying device and method thereof capable of outputting the fonts of the languages in use without disposing an extra memory for the fonts of the languages in use in the auxiliary message display device, and displaying all of the languages supported in Windows operating system. Furthermore, the displayed message is not limited to specific messages, and the message frame is more versatile.

The embodiment of the invention provides an auxiliary message displaying module applied in the computer system. The computer system comprises a host and an operating system. The operating system comprises a driver and a font database. The auxiliary message display module, which is an independent unit embedded in the host or connected to the host via a signal line, comprises a processing unit, a first memory unit, a display unit and a display driving unit. The processing unit receives and processes a first data, and then outputs a second data. The first memory unit is for memorizing a programming code of the processing unit. The display unit is for displaying a message. The display driving unit control display unit to display a message according to the second data. The driver retrieves a message from the operating system and obtains the font corresponding to the message from the font database, and then the message is processed to generate the first data. When the host is at a standby mode, the auxiliary message displaying module still can operate and display the message using the standby power of the host. The font database can be a font database of multiple languages capable of displaying the fonts of multiple languages.

The embodiment of the invention provides another auxiliary message displaying method applicable to an auxiliary message displaying module of a computer system. The computer system comprises a host and an operating system. Firstly, a message retrieved from the operating system. Next, the font corresponding to the message is retrieved and processed according to the font of the message to generate a first data. Afterwards, the first data is processed by the auxiliary message displaying module to generate a second data. Lastly, the message is displayed by the auxiliary message displaying module according to the second data. When the host is at a standby mode, the auxiliary message displaying module still can operate and display the message using the standby power of the host.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 (Prior Art) is a diagram of a conventional VFD module;

FIG. 2 is a diagram of a computer system according to a preferred embodiment of the invention;

FIG. 3 is a flowchart of a message displaying method according to the invention; and

FIG. 4 is a flowchart of step 32 in the message displaying method.

### DETAILED DESCRIPTION OF THE INVENTION

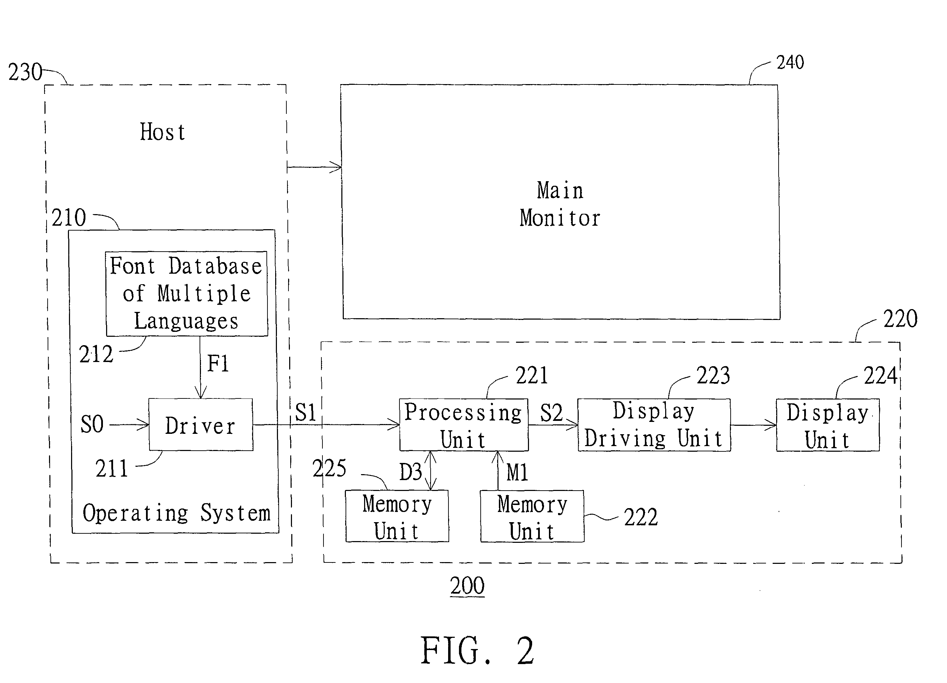

Referring to FIG. 2, a diagram of a computer system according to a preferred embodiment of the invention is shown. The computer system 200 comprises an operating system 210, an auxiliary message displaying module 220, a host 230 and a main monitor 240. The host 230 displays a frame via the main monitor 240. The operating system 210 comprises a font database of multiple languages 212 and a driver 211. The font database of multiple languages 212 is for recording the fonts of various languages. The driver 211 retrieves a message S0 from an application program of the operating system 210 and retrieves a font F1 from the font database 212, so that the message S0 is processed to generate a first data S1.

The auxiliary message displaying module 220 is an independent module and can be embedded in the host 230 or connected to the host 230 via a signal line. The auxiliary message displaying module 220 comprises a processing unit 221, a memory unit 222, a display unit 224 and a display driving unit 223. The processing unit 221 is for receiving and processing the first data S1 and then outputting the second data S2. The memory unit 222 is for memorizing programming codes, basic English alphabets and Arabic numbers such as data M1 for instance required by the processing unit 221. The display driving unit 223 is for receiving a second data S2 which controls the display unit 224 to display a message. When the host 230 is at the standby mode, the auxiliary message displaying module 220 still can operate and display the message using the standby power of the host 230.
Meanwhile, the host 230 is unable to display a frame via the main monitor 240.

The operating system 210 can be the Microsoft Window operating system, the Linux operating system, an embedded system, the Microsoft long horn operating system having an always-ready mode. When the operating system 210 enters the always-ready mode, the main monitor 240 is disabled, but the auxiliary message displaying module 220 still can display the message.

After retrieving the message S0 from the operating system 210 and the font corresponding to the message S0 from the font database 212, the driver 211 opens a device content (DC) in the operating system 210 outputs the font corresponding to the message S0 to the device content, and then the device content is processed to generate and output a first data S1 to the processing unit 221. The first data S1 is an image file whose format can be bitmap images such as Bitmap, JPEG or GIF, or vector graphics.

The driver 211 retrieves message S0 from the operating system 210 by means of an application programming interface (API) or a software development kit (SDK). The driver 211 transmits the first message S1 to the message displaying module 221 via an interface such as a universal serial bus (USB)1.1, USB 2.0, RS232, a parallel port or an inter-integrated circuit (12C).

The memory unit 222 can be an electrically erasable programmable read only memory (EEPROM). The display unit 224 can be a vacuum fluorescent display (VFD), an organic light-emitting diodes (OLED) or a liquid crystal display panel (LCD panel).

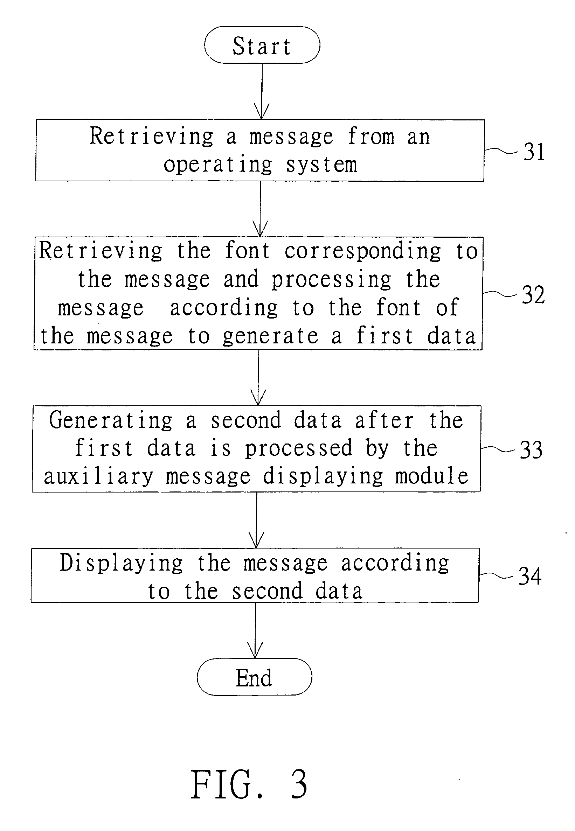

Referring to FIG. 3, a flowchart of a message displaying method according to the invention is shown. Firstly, a message is retrieved from an operating system as shown in step 31. Next, the font corresponding to the message is retrieved and processed according to the font of the message to generate a first data as shown in step 32. Afterwards, the first data is processed by the auxiliary message displaying module to generate a second data as shown in step 33. Lastly, the message is displayed according to the second data as shown in step 34.

In step 31, the message retrieved by the driver can be text only or a message containing text and image. Under such circumstances, the fonts retrieved from the font database of multiple languages are converted into an appropriate image file, and then the required special effects are added. In order to inform the user of the state of the application program of the operating system or extra messages, the driver can be set to retrieve a message from a predetermined application program and then display the message on the message displaying module. The message here refers to the lyrics of a song being played, the phone number of an incoming Internet call, the name of the radio station the user is listening to or the name of the program the user is watching when a computer system is in use.

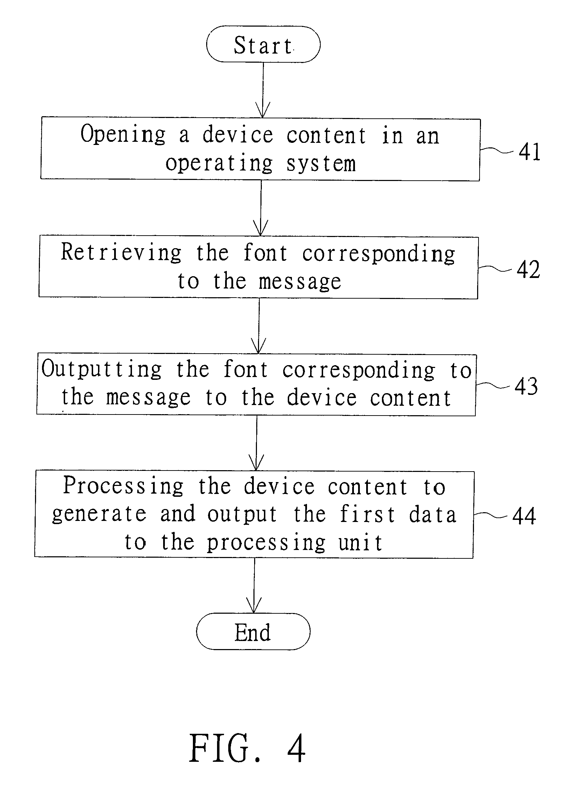

Referring to FIG. 4, a flowchart of step 32 in the message displaying method is shown. Firstly, a device content (DC) is opened in an operating system as shown in step 41. Next, the font of the word string corresponding to the message is retrieved as shown in step 42. Afterwards, the font corresponding to the message is outputted to the device content as shown in step 43. Lastly, the device content is processed to generate and output the first data to the processing unit of the message displaying module as shown in step 44. The processing refers to the special effect of the device content such as moving, rotating, flashing or scale-adjusting.

In step 33, the message processing module receives the first data, and adjusts the display effect of the display unit to generate the second data according to the controls of the driver such as display range and position, display frequency, visual effect or motion picture.

Referring to FIG. 2, a message displaying module 220 further comprises a memory unit 225. The memory unit 225 is for storing a third data D3, which comprises a document or an image file, and an image that can be used when displaying a message. The document and the image file is the message edited in the operating system 210 by the user. The memory unit 225 can be a dynamic random access memory (DRAM) or a static random access memory (SRAM) for instance.

The message displaying module 220 disclosed above can function regardless that the operating system 210 is in use or at the standby mode. When the operating system 210 is not in use, the main monitor 240 is unable to display a frame. The processing unit 221 would display the third data, which are stored in the memory unit 225 in advance, on the display unit 224.

The document of the third data D3 such as a scheduling message is stored in the memory unit 225 after the user has edited the scheduling message in the operating system 210. The processing unit 221 displays corresponding message on the display unit 224 according to the corresponding time of the scheduling message. The document can be a message to remind the user. For example, when the operating system 210 is at the standby mode, the processing unit 221 would monitor the scheduling message of the third data and display the scheduling message at corresponding time.

The image file contained in the third message D3 is the message that the user edits in the operating system 210. The image file can be a motion picture or a personalized picture. The processing unit 221 displays a motion picture on the display unit 224 according to the corresponding settings of the image file. For example, the message is displayed according to the setting when the operating system 210 is at the standby mode.

The application of the auxiliary message displaying module 220 covers a wide range and would play a crucial role in the concept of digitalized lifestyle. For example, when the user listens to the radio using the computer system 200, the frequency and the name of the radio station can be displayed on the auxiliary message displaying module 220. When the user watches TV using the computer system 200, the number of the channel, the name of the TV station or even the name of the program can be displayed on the auxiliary message displaying module 220.

The computer system and the message displaying module and method thereof disclosed in above embodiments of the invention have the following advantages:

1. The auxiliary message displaying module is capable of supporting multiple languages without disposing an extra font database.

2. The loyalty required for the font database is reduced, and the situation of lacking a supportive font database is avoided.

3. No extra memory cost for adding the font database would incur to the auxiliary message displaying module.

4. The displayed message is more versatile by means of the processing of operating system.

5. The message can be displayed even when the computer system is at the standby mode or the main monitor is disabled, transcending the conventional restriction that the computer system must be at an operating mode.

6. In response to the trend of digitalization of home appliances, the ranges and aspects of application of the invention are broad and wide, including relevant messages of TV, radio stations and Network telephones.

7. Low-cost hardware design is capable of providing long horn auxiliary display function when incorporated with auxiliary display platform SDK of Microsoft Long Horn operating system.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An auxiliary message displaying module applied in a computer system, wherein the computer system comprises a host and an operating system, the operating system comprises a font database and a driver, and the auxiliary message displaying module is disposed in the host and comprises:
a processing unit for receiving and processing a first data and then outputting a second data;
a first memory unit for memorizing a programming code of the processing unit;
a display unit for displaying a message; and
a display driving unit for controlling the display unit to display message according to the second data;
wherein the driver of the operating system retrieves a message from the operating system and obtains a font corresponding to the message from the font database, then the message is processed to generate the first data; when the host is at a standby mode, the auxiliary message displaying module operates and displays message using standby power of the host.

2. The auxiliary message displaying module according to claim 1, wherein the operating system is Microsoft Window operating system.

3. The auxiliary message displaying module according to claim 2, wherein the operating system is Microsoft Long Horn operating system, the operating system has an always-ready mode, in which the main monitor is disabled and the auxiliary message displaying module displays message.

4. The auxiliary message displaying module according to claim 1, wherein the driver retrieves the message from the operating system and the font corresponding to the message from the font database, a device content (DC) is opened in the operating system, the font corresponding to the message is outputted to the device content, and then the device content is processed to generate and output the first data to the processing unit.

5. The auxiliary message displaying module according to claim 4, wherein the first data is an image file, and the driver performs image processing on the device content to generate the first data.

6. The auxiliary message displaying module according to claim 1, further comprising a second memory unit for storing a third data, wherein the third data comprises a document or an image file to be displayed on the display unit.

7. The auxiliary message displaying module according to claim 6, wherein the document or the image file is the message to be edited in the operating system by the user.

8. The auxiliary message displaying module according to claim 6, wherein the font database is a font database of multiple languages for displaying fonts of multiple languages.

9. A message displaying method for an auxiliary message displaying module of a computer system, wherein the computer system comprises a host, a main monitor and an operating system, and the message displaying method comprises:
retrieving a message from the operating system;
retrieving a font corresponding to the message, and processing the message according to the font of the message to generate a first data;
generating a second data after the first data is processed by the auxiliary message display module; and
displaying message by the auxiliary message displaying module according to the second data;
wherein when the host is at a standby mode, the auxiliary message displaying module operates and displays message using standby power of the host.

10. The message displaying method according to claim 9, wherein the operating system is Microsoft Window operating system.

11. The message displaying method according to claim 10, wherein the operating system is Microsoft Long Horn operating system, the operating system has an always-ready mode, in which the main monitor is disabled and the auxiliary message displaying module displays message.

12. The message displaying method according to claim 9, wherein the step of retrieving the font corresponding to the message comprises:
opening a device content in the operating system;
retrieving the font corresponding to the message;
outputting the font corresponding to the message to the device content; and
processing the device content to generate and output the first data to the auxiliary message display module.

13. The message displaying method according to claim 12, wherein the first data is an image file, and the step of processing the device content is performing image processing on the device content to generate the first data.

14. The message displaying method according to claim 9, further comprising displaying message by the auxiliary message displaying module according to a third data, which is stored in the auxiliary message displaying module and comprises a document or an image file.

15. The message displaying method according to claim 14, wherein the document or the image file is the message to be edited in the operating system by the user.
